(19) **Europäisches Patentamt**

**European Patent Office**

**Office européen des brevets**

(11) **EP 1 310 358 A1**

(12) **EUROPEAN PATENT APPLICATION**

(43) Date of publication:
**14.05.2003 Bulletin 2003/20**

(51) Int Cl.[7]: **B32B 27/32**, B60R 13/02,
B32B 27/20

(21) Application number: **02257746.4**

(22) Date of filing: **07.11.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Kojima, Akihiko**<br>**Hunabashi-shi, Chiba-ken (JP)** |
| (30) Priority: **09.11.2001 JP 2001344603** | (74) Representative: **Wood, Graham**<br>**Bailey Walsh & Co,**<br>**5 York Place**<br>**Leeds LS1 2SD (GB)** |
| (71) Applicant: **OJI Interpack Co. Ltd.**<br>**Tokyo (JP)** | |

(54) **An automobile interior headliner molding or forming member and an automobile air duct**

(57) An air duct used for blowing air through a ceiling segment for air conditioning of an automobile in which the duct is comprised of a base material showing a superior leakage prohibiting characteristic, a high extension rate at the time of molding operation and facilitating a deep grave molding or forming operation. An automobile air duct is manufactured by applying a molding or forming member having three-layer complex plastic sheet materials having formed of an expanded polypropylene sheet 3 and mica-containing polypropylene sheets 1, 2 stacked on both sides thereof.

EP 1 310 358 A1

**Description**

2. BACKGROUND OF THE INVENTION

FIELD OF THE INVENTION

The present invention relates to a complex material for use in molding or forming various kinds of automobile interior headliner members such as an automobile air duct, or a rear wall, a headliner, an instrument panel, a sun-visor base plate and a tray or the like and more particularly a laminated member used after being molded or formed into a curved surface shape such as an automobile air duct of a resin molded product with its opening side being closely contacted with and adhered to a rear surface of a ceiling member and the like to blow out air through a blowing-out port arranged at the ceiling of an automobile as an air conditioner.

DESCRIPTION OF THE RELATED ART

Although a resin molded product used with its opening side being closely contacted with a rear surface of a ceiling member is used in the prior art as an air duct for an air conditioning operation for a large-sized automobile in the U.S. in particular, it is well known to provide a structure in which glass mats are laminated at both surfaces of an expanded urethane with olefin-based film or resin such as isocyanate or the like being laminated is used as base material for these products, the structure is pressurized uniformly to form it into a predetermined curved surface shape.
However, this molding or forming members obtained from such combinations involve a problem of higher aeration characteristic and a poor leakage characteristic of air from the duct due to an application of the expanded urethane as the base material. As a countermeasure against the foregoing, it is an essential requirement to apply it while olefin-based films are being adhered for its use, although its aeration characteristic is not satisfactory. In addition, this is a complex material comprised of several members, so that it has a problem in view of its molding workability or its cost.
In addition, since the expanded urethane of the base material is a semi-hard expanded urethane, its extension ratio at the time of molding operation (JIS K6767: 1999) is low and it becomes a cause in which a certain restriction must be set for its design characteristic. In particular, there occurs a tendency that a large-sized deep engraved molding is restricted. In addition, an extension rate at the time of molding may influence a molding workability and restrict the molding workability.

3. SUMMARY OF THE INVENTION

Accordingly, an object of the present invention can provide an air duct used for blowing out air from a ceiling mainly used for an air conditioning operation for an automobile, for example, in which a low aeration characteristic can be attained, air can be prevented from being leaked out of the air duct, an extension rate at the time of molding operation can be increased, a certain restriction for a deep engraving formation can be eliminated, and it may provide a superior molding workability as well as a low manufacturing cost, and further the present invention provides a complex material capable of preferentially molding or forming various kinds of automobile interior headliner members such as a rear wall, a headliner, an instrument panel, a sun-visor base plate and a tray or the like other than the air duct.
With a view to overcoming the above-described problems, the below-described aspects are embraced in the present invention.
A first product of the present invention is an automobile interior headliner molding or forming member having a three-layer complex plastic sheet material having formed of an expanded polypropylene sheet and mica-containing polypropylene sheets stacked on both sides thereof.
As the expanded polypropylene sheet to be used in the present invention, an atmospherically expanded and cross-linked polypropylene sheet is suited.
A second product of the present invention is an automobile interior headliner molding or forming member according to the first invention characterized in that an aeration characteristic of the three-layer complex plastic sheet material (measured by a process of 8.27.1A of JIS L1096: 1999) is 0.8 cm$^3$/cm$^2 \cdot$ s or less.
A third product of the present invention is an automobile interior headliner molding or forming member according to the first invention or the second invention characterized in that an elongation rate up to a time of cutting of the three-layer complex plastic sheet material (JIS K6767 : 1999) is 200 to 300%.
A fourth product of the present invention is an automobile interior headliner molding or forming member according to any one of the first invention to the third invention characterized in that an expansion ratio of the expanded polypropylene sheet constituting the three-layer complex plastic sheet material is 5 to 50 times and its thickness is 2 to 6 mm, the mica-containing polypropylene sheets are molded or formed by mica-containing resin in which mica is mixed with polypropylene resin having a mica containing ratio of 15 to 40 mass %, and its thickness is 100 to 300 μm.

In the present invention, it is preferable that the polypropylene resin for use in molding or forming the mica-containing polypropylene sheet shows a testing temperature of 230 °C and a melt flow rate of 3 to 40 g/10 min under a test load of 21.18N.

In addition, in the present invention, it is preferable that a maximum flexural load at break is 9.8 to 49.0N as measured at a bending test by applying, at a rate of 50 mm/min, a load to a test piece of 50 mm x 150 mm at the center of 100 mm span length supported freely at both ends until the three-layer complex plastic sheet material is broken.

A fifth product of the present invention is an automobile interior headliner molding or forming member according to any one of the first invention to the fourth invention characterized in that a reinforcingportion is partially formed at one surface of the three-layer complex plastic sheet material by the mica-containing polypropylene sheet. In this fifth invention, although the mica-containing polypropylene sheet partially adhered to the one surface has preferably the same quality as that of the mica-containing polypropylene sheet constituting a front surface side of the three-layer complex plastic sheet material, whatever its quality may be slightly different, it is satisfactory if it is in a range described in the fourth invention.

In addition, in the fifth invention, it is satisfactory that the mica-containing polypropylene sheet for the molding or forming member to be pressurized and molded partially adhered to any one side of the molding or forming member before its pressurizing and molding is temporarily fixed to the mica-containing polypropylene sheet constituting a front surface side of the three-layer complex plastic sheet material, and this portion is melted with heat and adhered when it is heated, pressurized and molded to form the air duct.

A sixth product of the present invention is an automobile interior headliner molding or forming member according to any one of claims 1 to 5 characterized in that a back treating material has been adhered to the back side of the three-layer complex plastic sheet material.

A seventh product of the present invention is an automobile air duct having a three-layer complex plastic sheet material having formed of an expanded polypropylene sheet and mica-containing polypropylene sheets stacked on both sides thereof.

## 4. BRIEF DESCRIPTION OF THE DRAWINGS

FIG. 1 is a layer constitution figure for an automobile air duct in the example 1 of the present invention;

FIG. 2 is a layer constitution figure for a partial adhesion of the mica-containing polypropylene sheet at an automobile air duct in the example 2 of the present invention;

FIG. 3 is a perspective view for showing an automobile interior headliner molding or forming member in the example 1 of the present invention;

FIG. 4 is a perspective view for showing an automobile interior headliner molding or forming member in the example 2 of the present invention;

FIG. 5 is a perspective view for showing one example (the example 1) of the automobile air duct of the present invention;

FIG. 6 is a perspective view for showing one example (the example 2) of the automobile air duct having a reinforcing portion of the present invention;

FIG. 7 is a perspective view for showing the automobile ceiling material to which the air duct of the present invention is fixed; and

FIG. 8 is a layer constitution figure for showing another example of the air duct in the present invention.

## 5. DESCRIPTION OF THE PREFERRED EMBODIMENTS

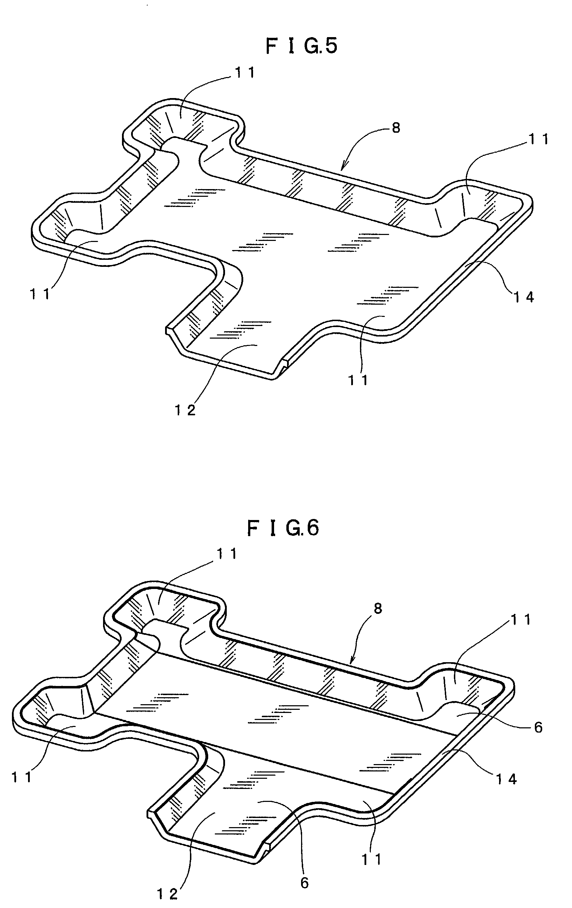

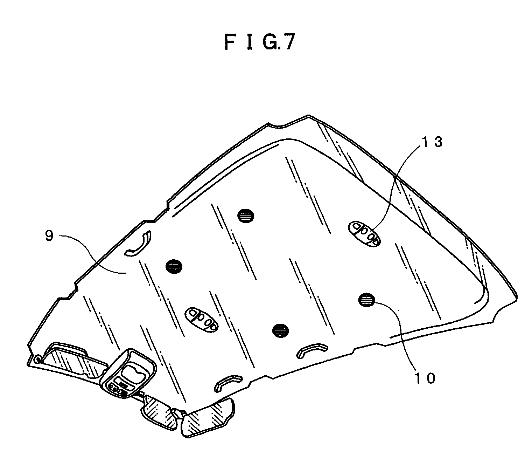

Referring now to the drawings, the automobile air duct acting as one example of the preferred embodiment of the present invention will be described as follows. The air duct of the present preferred embodiment is an air duct 8 of a resin molded or formed product (refer to FIGS. 5 and 6) arranged to be closely contacted (adhered) to a rear member such as a ceiling member 9 so as to blow air from blowing-out ports 10 arranged at the ceiling member 9 of an automobile shown in FIG. 7 and this is mainly used for an air conditioning operation. This air duct 8 is normally formed such that its one surface side is notched to form a curved surface, its opposite surface is provided with a flange 14 closely contacted with the ceiling member 9 and the air duct has an air supplying segment 12 and an air blowing port corresponding segment 11 or the like. The present inventors et al have acknowledged some disadvantages as problems of a laminated member having, as its major constituent, an expanded urethane used in the prior art as a base material for these air ducts that a degree of aeration is high, a leakage characteristic attained from the ducts is not superior, an extension rate at the time of molding or forming is low and its molding characteristic found in a base material for each of the ducts requiring a high deep engraving molding or the like is insufficient, started to resolve these problems and completed the present invention.

The product of the preferred embodiment is an automobile air duct molded or formed under application of a base material, having as its major constituent, a three-layer complex plastic sheet material having formed of an expanded polypropylene sheet andmica-containing polypropylene sheets stacked on both sides thereof. In the present preferred embodiment, since the raw material, having as its major constituent, an expanded polypropylene sheet and polypropylene sheets, is used, an aeration characteristic is low as a characteristic of raw material, a leakage from the duct is less, an extension ratio at the time of molding or forming operation is high, a superior design characteristic is attained and it has a superior characteristic as a duct.

As to the aeration characteristic (JIS L1096) of the present preferred product, since there is provided a complex material having, as a base material, normal pressure expanded cross-linking polypropylene sheet having an independent expanded structure of quite low aeration as its feature and further mica-containing polypropylene sheets having similarly a low aeration characteristic laminated at both surfaces, an aeration characteristic of the three-layer complex plastic sheet material is about 0.6 ($cm^3/cm^2 \cdot s$). As compared with the fact that an aeration characteristic of an expanded urethane in the prior art duct material was about 100 ($cm^3/cm^2 \cdot s$) and an aeration characteristic of the expanded urethane complex material was about 1.0 ($cm^3/cm^2 \cdot s$), its aeration characteristic has been remarkably improved. In addition, its manufacturing cost has also been improved because the complex laminated member of the prior art device could be formed into a simple three-layer structure. Additionally, a restriction on numerical value of less than an aeration characteristic of 0.8 ($cm^3/cm^2 \cdot s$) in this preferred embodiment is a numerical value that can be accomplished in accordance with the constitution of the complex material in the preferred embodiment and this is a numerical value defined as an index for preventing leakage.

As to its design characteristic, the elongation at the time of molding or forming of the three-layer complex plastic sheet material (JIS K 6767) becomes a minimum value of 200%, so that a deep engraving molding or forming required in the duct can be easily carried out. The extension rate at the time of molding or forming operation for the prior art expanded urethane complex material for duct was about 20 to 30%, so that it could be understood that the product of the present preferred embodiment is remarkably superior in view of molding or forming characteristic or design characteristic. Further, in accordance with the constitution of the complex material of the present invention, the restriction in numerical value of the extension ratio of 200 to 300% in the present preferred embodiment is a value which can be accomplished and this value is a numerical value defined as an index for setting the molding or forming characteristic. The molding or forming characteristic is deteriorated at a value of extension rate of 200% or lower and if the value exceeds 300%, it is hard to accomplish it with the complex material of the preferred embodiment.

Said mica-containing polypropylene sheet for use in forming the three-layer complex plastic sheet material is normally manufactured by an injection molding process and the resin extruded out of a T-die is adhered to the expanded polypropylene sheet. It is preferable that the mica-containing polypropylene sheet is set to such a condition as one in which it can be mass-produced by a production machine and further it is preferable that a T-die width is a wide width of about 1500 mm and the sheet can be extruded into a thin sheet shape of about 100 to 300 μm at a taking-up speed of 10 to 30 m/min.

Although mica is blended to improve rigidity and a thermal insulating performance of a member, it is preferable that white mica, silk mica and gold mica or the like are applied. In the case that an aspect ratio is 5 or more and a mica-containing rate is 15 to 40 mass %, it is preferable that a particle diameter is 10 to 100 μm. A laboratory-based testing method shows that if the T-die width is 500 mm or less, the taking-up speed is 10m/min. or lower and the sheet thickness is 500 μm, there occurs no problem even if the values are out of the aforesaid condition. However, under the aforesaid mass-production condition (a condition in which the sheet is extruded into a thin sheet of 100 to 300 μm at a T-die width of about 1500 mm and a taking-up speed of 10 to 30 m/min.), its rigidity is deteriorated even if a film forming characteristic is superior under a condition in which a particle diameter is 10 μm or lower and if the particle diameter exceeds 100 μm, a bore formation occurs at the film forming portion and this is inappropriate. In view of rigidity and a film forming characteristic, a more preferable particle diameter range is 15 to 50 μm.

With regards to the content of mica, rigidity of the resulting film is poor at a content less than 15 mass %, while holes tend to be made frequently at a content exceeding 40 mass %. From the viewpoint of preventing holes, the preferred mica content falls within a range of 15 to 30 mass %.

The mica is preferred to have an aspect ratio (obtained by dividing diameter by thickness) of 5 or greater, with 10 or greater being particularly preferred. Mica having an aspect ratio less than 5 is inferior in rigidity improving effects, because it cannot be oriented in parallel to a molding member sheet. A sheet available from a mica having a higher aspect ratio is presumed to exhibit greater rigidity owing to an increase in the number of mica layers in the molding member sheet.

A polypropylene resin to be a base for kneading with mica is preferred to have a melt flow rate (in accordance with Method B of JIS-K-7210) of 3 to 40 g/10 minutes at testing temperature of 230 °C and test load of 21.18 N under the above-described mass producing conditions (conditions for extruding into a sheet having a film thickness as thin as 100 to 300 μm at a T die width as wide as about 1500 mm and take-off speed of 10 to 30 m/minutes) when the mica has an aspect ratio of 5 or greater, particle size of 10 to 100 μm and content of 15 to 40 mass %. At such a comparatively high melt flow rate, the resin kneaded with mica exhibits good spreadability upon extrusion, making it possible to form a sheet free of holes and having good appearance. Melt flow rates less than 3 g/10 minutes are not preferred because a sheet thus obtained tends to be pierced with holes due to poor spreadability. Melt flow rates exceeding 40 g/10 minutes on the other hand are not preferred because the resin becomes excessively soft.

The rigidity of the sheet can be heightened by improving the adhesion on the interface between the polypropylene resin and mica. Since rigidity depends on the adhesion on the interface as described above, sheet formation after addition of a coupling agent acting on the interface as needed is therefore preferred. Treatment of mica with a silane coupling agent is preferred. This treatment heightens hydrophobic nature on the surface of mica, thereby improving the adhesion with the polypropylene resin, resulting in the formation of a film having high rigidity. The content of the coupling agent is preferably 0.1 to 5 wt.%.

The expanded polypropylene sheet to be combined as a complex material with the mica-containing polypropylene sheet is preferably an atmospherically expanded and crosslinked polypropylene sheet produced by atmospheric crosslinking and expansion. The atmospheric crosslinking expansion is a method to obtain an expanded body by blending a resin and a thermally decomposed type foaming agent with a crosslinking agent or crosslinking assistant, extruding the mixture into an expandable sheet and then crosslinking and foaming it by exposure to electron beams; or a method of extruding the mixture, and carrying out crosslinking and expansion (chemical crosslinking method).

When the expansion ratio does not exceed several times or the like, the sheet has rigidity. When the expansion ratio increases to several tens times, on the other hand, the sheet exhibits properties as a soft and flexible film. As the air duct member, the laminated structure of a laminated member shouldbe determined in reference to an aeration characteristic, an extension ratio at the time of molding or forming, a rigidity and a light weight characteristic generally required. In reference to these items, it is preferable in the present preferred embodiment that an expansion rate is 5 to 50 times and a thickness is 2 to 6 mm.

In the present preferred embodiment, it is a basic concept that a three-layer complex plastic sheet material comprised of a mica-containing polypropylene sheet/expanded polypropylene sheet/mica containing polypropylene sheet is used as an automobile interior headliner molding or forming member in such a form as one to hold the expanded polypropylene sheet and in the sentences of the specification, this three-layer structure is described as "the three-layer complex plastic sheet material" or merely "the three-layer complex plastic material".

As described above, although a thickness of the three-layer laminated structure is determined by a target value of rigidity and a lightweight while considering an aeration characteristic and an extension ratio at the time of molding or forming operation, it is preferable that this is normally 2.2 to 6.6 mm, and further preferably it is 2.2 to 6 mm in the case of three-layer complex plastic sheet material. Additionally, it is preferable that a maximum flexural load (measured by a testing method to be described later) for the three-layer complex plastic sheet material is 9.8 to 49.0N (1 to 5 kgf). If the thickness is 2.2 mm or lower, it might be hard to hold either a requisite aeration characteristic or rigidity, and even if the thickness is set to be a value exceeding 6.6 mm, any specific improvement in characteristic may not be expected. When the maximum flexural load is less than 9.8 N and the sheet has, at one side, a length exceeding 1 m, sagging becomes large, which happens to deteriorate a working efficiency upon attachment. When the maximum flexural load exceeds 49.0 N, on the other hand, a special improvement in properties cannot be recognized. It should be noted that the maximum flexural load as described herein means a value which an automobile air duct member (this is equal in meaning of an automobile air duct) is required to have after completion of molding or forming. When an automobile air duct member is formed from a three-layer complex plastic sheet material having a structure of mica-containing polypropylene sheet/expanded polypropylene sheet/mica-containing polypropylene sheet without subjecting it to any special reinforcing processing, the above-described maximum flexural load can be specified as the maximum flexural load which an automobile air duct member having a three-layer complex plastic sheet material is required to have before molding or forming.

Usually, the three-layer complex plastic material of the present invention is preferably produced by continuously feeding an expanded polypropylene sheet, which is in the rolled form, while rewinding it; extruding a mica-containing polypropylene sheet under a molten state from a T die to stack it over the expanded polypropylene sheet, thereby forming a two-layer sheet; winding it; and stacking a mica-containing polypropylene sheet, which has been extruded under the molten state from a T die, over the two-layer sheet while continuously rewinding it.

Further, it is an object to prevent a vibration sound caused by vibration from being produced and to arrange a layer of back treating material outside an automobile air duct installed at a rear side of an automobile ceiling member. As the back treating material, a non-woven fabric or the like are preferably applied.

In the present invention, a layer of a back treating material is usually formed over the back side of the three-layer complex plastic sheet material, for example, by, upon formation of the three-layer complex plastic sheet material, continuously rolling back a two-layer sheet composed of an expanded polypropylene sheet and mica-containing polypropylene sheet stacked thereover, and stacking thereover another mica-containing polypropylene sheet injected from a T die, while adhering the back treating material to the outside of the another mica-containing polypropylene sheet. The production of an automobile air duct member is usually completed by the formation of a three-layer complex plastic sheet material or attachment of a back treating material thereto.

In addition, in the present invention, it is possible to provide a structure in which after either a three-layer complex plastic sheet material or a molding or forming member such as an automobile air duct having a layer of back treating material or the like formed at the complex material is cut into a proper size, a mica-containing polypropylene sheet is partially adhered to a segment requiring a strength of the mica-containing polypropylene sheet (preferably by a method for temporarily fixing it with a tape and the like). It is preferred, but not particularly limited, to effect reinforcement at either one or both of the outer edge and/or the central region of the complex material from the viewpoints of efficient reinforcement and efficient production.

This mica-containing polypropylene sheet of the air duct partially adhered is melted and adhered at the time of pre-heating and molding with a heating furnace described in the above item and just after it the sheet is pressurized, resulting in that its strength can be partially increased.

In addition, although it is preferable that the mica-containing polypropylene sheet partially adhered has the same quality as that of the mica-containing polypropylene sheet of the three-layer complex plastic sheet material in view of its molding or forming characteristic, there occurs no problem whatever slight difference in quality is found if its molding or forming characteristic or the like does not show any problem.

Additionally, it is also possible to apply it as another method for reinforcing the three-layer complex plastic sheet material that when the mica-containing polypropylene sheet constituting any one of the three-layer complex plastic sheet materials is extruded and laminated on the expanded polypropylene sheet, a lip opening degree of the discharging segment (T-die) of an extruder is partially changed to cause a thickness of the mica-containing polypropylene sheet at the front surface side to be partially changed.

This method also enables a partial increasing in strength to be attained in the same manner as that for partially adhering the mica-containing polypropylene sheet.

Although no particular limitation is imposed on the width of the portion (slender region) of the mica-containing polypropylene sheet to be thickened by partial adhesion, 100 to 400 mm is preferred, with 200 to 300 mm being more preferred. When the reinforced portion is too narrow, reinforcing effects are not sufficient. When the reinforced portion is too wide, on the other hand, thickening seems to cover the whole area, resulting in lowering in weight reducing effects and cost saving effects of the member. Although no particular limitation is imposed on the thickness of the partial adhesion, about 100 to 300 $\mu$m is preferred. This reinforcing thickness is similar to that of the mica-containing polypropylene sheet on the surface side of the three-layer complex plastic sheet material. If this thickness is too thick, it is not preferable because the step segment at the reinforcing part does not become a gradual curved line even if the heating, pressurizing and molding operations are applied and its weight does not become light. To the contrary, if the thickness is too thin, its reinforcing effect becomes insufficient and it is not preferable.

Although no particular limitation is imposed on the width of the portion (slender region) of the mica-containing polypropylene sheet to be thickened by partial adhesion, 100 to 400 mm is preferred, with 200 to 300 mm being more preferred. When the reinforced portion is too narrow, reinforcing effects are not sufficient. When the reinforced portion is too wide, on the other hand, thickening seems to cover the whole area, resulting in lowering in weight reducing effects and cost saving effects of the member. Although no particular limitation is imposed on the thickness of the partial adhesion, about 100 to 300 $\mu$m is preferred. This reinforcing thickness is similar to that of the mica-containing polypropylene sheet on the surface side of the three-layer complex plastic sheet material.

Further, although it is preferable in the present invention to arrange the reinforcing segment of the three-layer complex plastic sheet material at an opposite side of the back treating material due to a reason such as an easy adhering characteristic of the back treating material in reference to its manufacturing order and the like, it could be possible to arrange the reinforcing segment at the side of the back treating material of the three-layer complex plastic sheet material unless such an arrangement as above is considered.

[Examples]

Some examples of the automobile air duct will be described as follows. Some numerical values such as a blending ratio and a concentration or the like are numerical values in reference to either a solid substance or effective substance . Additionally, the measurement was performed in accordance with the following method.

<Measurement of an aeration characteristic ($cm^3/cm^2 \cdot s$)>

This is measured in accordance with a provision of JIS L 1096: 1999. That is, this is measured in accordance with 8.27.1 A process (Fragile method) of this standard. This is an amount of air passing through a unit area ($cm^2$) of a test piece in a unit time (second) and the aforesaid unit is used in the same meaning as that of a unit of $cm^3/cm^2 \cdot$

s) or $cm^3/cm^2/s$.

The test piece was molded or formed into a flat shape after being heated, the test piece was cut from the molding or forming member and measured in place of the processing in which each of the molding or forming members for use in molding or forming an automobile air duct is attained and press molded or formed into a duct shape through its heating by applying a method indicated in the following examples.

<Measurement of an elongation (%) up to a cutting>

This is measured in accordance with JIS K 6767: 1999. When an inter-marker distance of the test piece before testing is defined as $I_0$(mm), an inter-marker distance of the test piece after cutting is defined as $I_1$ (mm) and an elongation is defined as E (%) , the elongation is calculated in accordance with the following equation.

$$E = 100 \times (I_1 - I_0)/I_0$$

The test piece was molded or formed into a flat shape after being heated, the test piece was cut from the molding or forming member and measured in place of the processing in which each of the molding or forming members for use in molding or forming an automobile air duct and a ship air duct is attained and press molded or formed into a duct shape through its heating by applying a method indicated in the following examples.

<Measurement of a maximum flexural load (N) and a flexural modulus gradient (N/cm)>

A test piece was attained in the same manner as that of the aforesaid measurement. Provided that a size of the test piece was 50 mm x 150 mm, a load was applied under a speed of 50 mm/min. to the central part of a span length of 100 mm in both ends free suspension with the inner side of the duct being set low and then a curved line indicating a relation between the load and an amount of strain was attained. Then, a load when the material is broken was set as a maximum flexural load. In addition, a bending load per 1cm of an amount of strain was calculated in reference to an amount of strain of a pressurization initial linear line portion of the measurement chart curved line and the bending load to attain a bending resilient gradient.

<Measurement of anti-heat cantilever self-load suspension>

A test piece was attained by the same method as that of the aforesaid measurement. Provided that a size of the test piece was 50 mm x 250 mm, the test piece was set under a holding margin of 50 mm and a span length of 200 mm with a side becoming an inside part of the duct being set low (set as a cantilever fixed supporting) , it was left for 4 hours in an environment of 90°C, a flexure changing amount after being left in a testing environment was measured with an initial value at the extremity end of the test piece being applied as a reference value.

Then, a practical example of the automobile air duct will be described as follows.

<Example 1>

Gold mica having a particle diameter of 40 μm and an aspect ratio of 10 and a silane coupling agent were melted and kneaded together with polypropylene resin pellets having a melt flow rate of 25g/10 minutes at a testing temperature of 230 °C and a test load of 21.18N (according to a process B of JIS-K-7210) in such a way that the gold mica might become 20 wt% and the silane coupling agent may become 0.1 wt%, respectively. The pellets were applied and the gold mica-containing polypropylene resin 1 is melted and extruded out of a T-die having an extruding width of 1500 mm in such a way that its thickness might become 150 μm, laminated continuously on a normal pressure expanded cross-linked polypropylene sheet 3 with a thickness of 3 mm and expanded by 25 times being fed at a speed of 28 m/min, thereby the double-layer complex plastic sheet material and taken up. Further, the gold mica-containing polypropylene resin 2 was also melted and extruded out of the T-die with an extruding width of 1500 mm also against the opposite surface of the normal pressure expanded cross-linked polypropylene sheet 3 while the double-layer complex plastic sheet material being fed out, and laminated continuously against it at a speed of 28 m/min. to attain a thickness of 150 μm, and concurrently a polyester span bond non-woven fabric with a Metsuke of $15g/m^2$ acting as a back treating material 4 was adhered to an outside part (to a surface becoming an outside part of the duct) to attain a laminated member of the three-layer complex plastic sheet material and the back treating material.

This laminated material was cut to such a size as one appropriate for the molding or forming member for an automobile air duct (this is meant by a member before heating and press molding operations) . The laminated material attained in this way was put in a heating furnace in advance, pre-heated there, pressed with a cooling die to attain an automobile air duct member (this is meant by a member formed into a duct-shaped curved surface). Provided that taking of measurement test pieces for the above-described four items of an aeration characteristic, an elongation, a maximum flexural load and a flexing or the like was carried out such that the three-layer complex plastic sheet material having no lamination of the back treating material was attained, heated, pressed to obtain the member corresponding to the vehicle air duct member (a sample of a flat plate-like laminated member with about 300 mm rectangular one) and the test piece was cut.

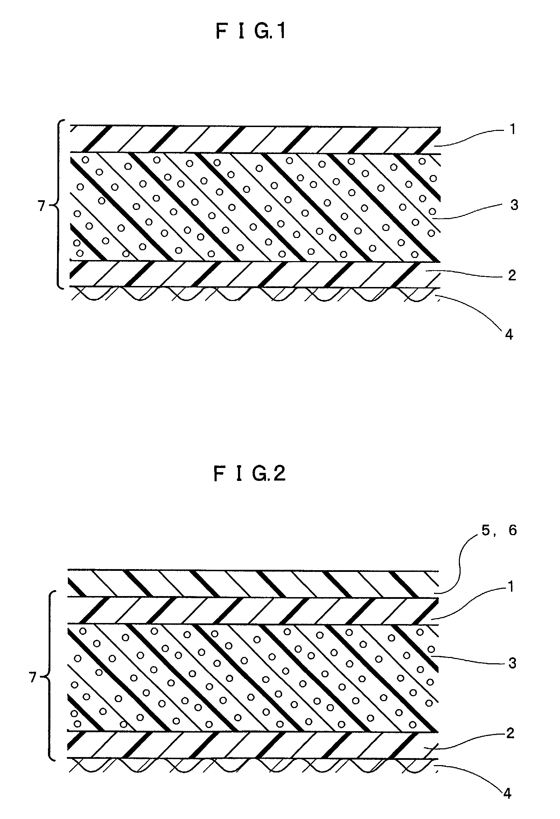

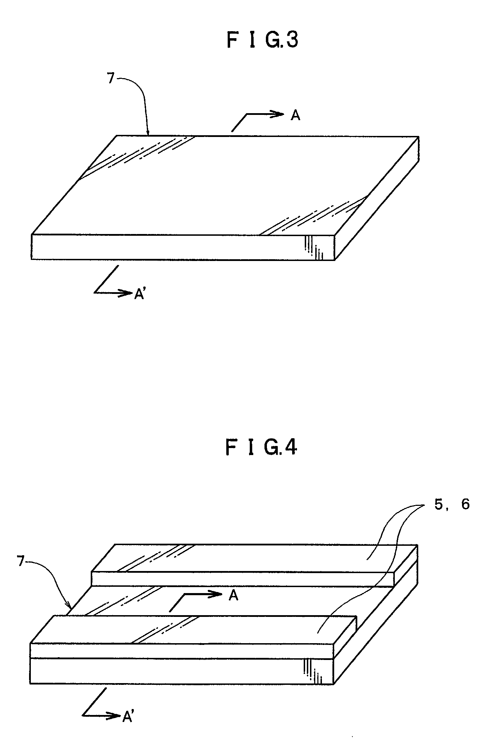

FIG. 3 is a perspective view illustrating an automobile air duct member in this example, while FIG. 1 is a view illustrating the layer constitution of an automobile air duct member (sample) after completion of the molding or forming. FIG. 1 is a view illustrating the layer constitution corresponding to the cross-section taken along a line A-A' of FIG. 3. FIGS. 1 to 4 are all illustrated with the side becoming an inside part of the duct being placed at an upper side.

In addition, in FIG. 5 is illustrated an automobile air duct member having its molding completed (this is meant by a member molded into a curved surface of duct shape). FIG. 7 illustrates an automobile ceiling member 9 to which such an automobile air duct member 8 as described above is fixed, wherein the automobile air duct member 8 is arranged at the rear side position of the air blowing-out port 10 of the automobile ceiling member 9 in such a way that a part 11 corresponding to the air blowing-out port may be overlapped there.

<Example 2>

The mica-containing polypropylene sheets with a thickness of 150 μm and a width of 300 mm (the members molded or formed by gold mica containing polypropylene resin 4 described in the example 1) were partially adhered to both side ends along the resin extruding direction of the complex plastic material at one side of the laminated member of "three-layer complex plastic material + the back treating material" attained in the example 1 (at the side becoming the inside portion of the duct), and (temporarily fixed with a tape) so as to attain the automobile air duct molding or forming member under the same condition as that of the example 1 in reference to others. Further, the laminated member was put into the heating furnace in advance, pre-heated there, press-formed by cold dies to attain the automobile air duct member (this is meant by a member formed into a duct-shaped curved surface). Provided that the taking of the measurement test pieces for the aforesaid four items such as an aeration characteristic, an elongation, a maximum flexural load and a flexing and the like was carried out such that "the three-layer complex plastic sheet material + the partial adhered reinforcingmaterial" having no lamination of the back treating material were attained, heated and pressed to mold or form the member corresponding to the automobile air duct member (a sample of a flat plate-like laminated member with about 300 mm rectangular one) and the test pieces were cut.

FIG. 4 is a perspective view of an automobile air duct member of this example, while FIG. 2 illustrates the layer constitution of an automobile air duct member (sample) after completion of the molding. FIG. 2 is view illustrating the layer constitution of the cross-section taken along a line A-A' of FIG. 4 which corresponds to the portion to which the mica-containing polypropylene sheet has been partially adhered.

In addition, the automobile air duct member (this is meant by a member molded or formed into a duct-shaped curved surface) of which molding or forming has been completed is shown in FIG. 6 and this air duct member was fixed to a rear side of the automobile ceiling member 9 shown in FIG. 7.

<Example 3>

In the example 1, in the case that the mica-containing polypropylene sheet becoming an inside part of the duct of the three-layer complex plastic material was extruded out of the T-die and laminated, a lip clearance at the T-die was adjusted, its value was 300 μm at each of the widths of both end portions of 300 mm, the lip clearance at other portions was set to 150 μm. Further, the vehicle air duct molding or forming member and the ship air duct molding or forming member were attained in regard to other conditions under the same one as that of the example 1. This laminated member was put in a hating furnace in advance, pre-heated there, press molded with cold dies to attain the vehicle and ship air duct members (meant by members molded and formed into a duct-shaped curved surface). Provided that a taking of the measurement test pieces having the aforesaid four items such as an aeration characteristic, an elongation, a maximum flexural load and a flexure or the like was carried out such that a thick member of the three-layer complex plastic sheet material not laminated with the back treating material (a member having a thickness of the mica-containing polypropylene sheet at one side of 300 μm) was attained, heated, pressed and members corresponding to the vehicle and ship air ducts (samples of a flat plate-like laminated member with about 300 mm rectangular one) were molded and the test piece was cut.

Although a perspective view illustrating the vehicle and ship air duct molding or forming members in the present example is approximately the same as that of FIG. 4, the thick portion of the mica-containing polypropylene sheet is integrally manufactured, resulting in that no interface line is present there. Although the layer configuration figure of the vehicle and ship air duct members (samples) having molding or forming completed is also substantially the same shape as that of FIG. 2, no interface line is present due to the aforesaid reasons.

<Comparative Example 1>

Measurement was carried out in regard to an automobile air duct (a molded product) having, as its major constituent element, semi-hard type polyurethane expanded material that has been applied in the prior art.

A constitution of this member was set such that both sides of the aforesaid expanded polyurethane material were sandwiched by material having a glass mat or an olefin film laminated and non-woven fabrics were adhered to both sides of it [a non-woven fabric at a roof iron plate ($30g/m^2$)/an olefin film ($50 \mu m$)/a glass mat ($100g/m^2$)/a semi-hard urethane expanded material (with a thickness of 7mm)/a glass mat ($100g/m^2$)/an interior side non-woven fabric ($30g/m^2$). In these members, [a glass mat ($100g/m^2$)/a semi-hard urethane expanded material (with a thickness of 7mm)/a glass mat (100g/m2)] are adhered with isocyanate resin.

The test piece was cut from the member and its aeration characteristic ($cm^3/cm^2 \cdot s$) and elongation (%) were measured.

<Comparative Example 2>

Both side-laminated members were peeled off from the prior art automobile air duct in the comparison example 1, only the semi-hard urethane expanded material of the major constituent member was taken out, the test piece was cut form the member and its aeration characteristic ($cm^3/cm^2 \cdot s$) and elongation (%) were measured.

<Result of Test>

In Tables 1 and 2 are indicated results of test for the automobile air duct member comprised of complex plastic material attained in the examples 1 to 3 and the prior art automobile air duct indicated in the comparison examples 1 and 2, respectively.

From these tables, it can be understood that the complex plasticmaterials in the examples 1 to 3 have a superior aeration characteristic and a superior elongation characteristic at the time of molding or forming operation as compared with those of the prior art product indicated in the comparison example 1 and the complex plastic material has a sufficient characteristic as an automobile air duct member. As to the aeration characteristic, the prior art product (the comparison example 1) has an improved aeration characteristic by laminating the olefin film or the like on the expanded polyurethane material (the comparison example 2). However, it shows a certain leakage of 1.0 $cm^3/cm^2 \cdot s$ and so it is not satisfactory. To the contrary, the examples 1 to 3 of the products of the present invention have an aeration of 0.6 $cm^3/cm^2 \cdot s$ and so it is possible to say that the leakage is substantially reduced to half. In addition, as to the elongation characteristic at the time of molding or forming operation, it is possible to say that an improvement effect of 8 to 9 times as compared with that of the prior art product (the comparison example 1) can be attained.

Additionally, the examples 2 and 3 partially reinforcing the mica-containing polypropylene sheet at the front surface side of the three-layer complex plastic sheet material have further improved rigidity as compared with that of the example 1 and it is understood that a flexing characteristic at a high temperature is also improved.

Table 1

| | Weight ($g/m^2$) | Thickness (mm) | Aeration characteristic ($cm^3/cm^2/s$) | Elongation (%) (Vertical) |
|---|---|---|---|---|
| Example 1 | 540 | 3.8 | 0.6 | 263 |
| Example 2 | 545 | 4.1 | 0.6 | 258 |
| Example 3 | 570 | 4.1 | 0.6 | 260 |
| Comparative Example 1 | 900 | 7.0 | 1.0 | 30 |
| Comparative Example 2 | 600 | 5.0 | 100.0 | 26 |

Table 2

| | Shrinkage Rate (Vertical) (%) | Rigidity (Vertical) | | Cantilever gravity drawdown (Vertical) (mm) |
|---|---|---|---|---|
| | 90°C 8Hr | Maximum bending load (N) | Flexural modulus gradient (N/cm) | |
| Example 1 | -0.15 | 20 | 44 | -10 |
| Example 2 | -0.14 | 24 | 51 | -8 |
| Example 3 | -0.17 | 24 | 50 | -8 |
| Comparative Example 1 | - | - | - | - |
| Comparative Example 2 | - | - | - | - |

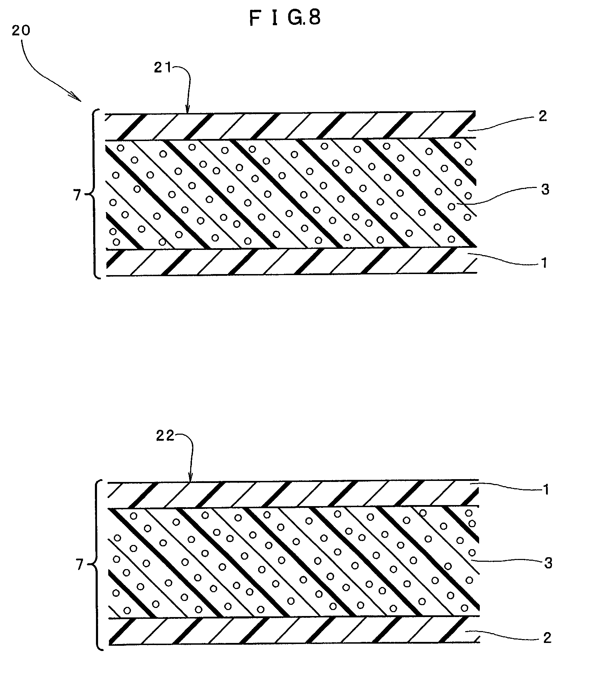

In FIG. 8 is illustrated another example of the automobile air duct comprised of an automobile interior headliner molding or forming member of the present invention.

In this example, the automobile air duct member 21 at the ceiling side and the automobile air duct member 22 at the interior side are molded or formed by the aforesaid three-layer complex plastic sheet material 7, these air duct members 21, 22 are adhered to each other to attain the automobile air duct 20.

The automobile air duct having such a constitution as above enables a substantial light weight to be attained as compared with that of the prior art product comprised of polyethylene or ABS resin and further has an advantage that a less amount of air leakage is attained.

In addition, as an example of modification of the automobile air duct 20 shown in FIG. 8, it can be devised that either both the automobile air duct member 21 at the ceiling side and the automobile air duct member 22 at the interior side or any one of these members is applied as two-layer complex plastic sheet member having the mica-containing polypropylene sheet eliminated facing at the inside part of the air duct or one-layer plastic sheet having only mica-containing polypropylene sheet.

Additionally, the three-layer complex plastic sheet material having formed of both the expanded polypropylene sheet and mica-containing polypropylene sheets laminated at both surfaces of the former sheet, which are basic constituent portions of the automobile interior headliner molding or forming member of the present invention, can be used not only for the molding or forming material of the illustrated automobile air duct, but also for other various kinds of automobile interior headliners such as a rear wall, a head liner, an instrument panel, a base plate for a sun-visor and a tray or the like, for example, and in this case, it is an optional that a covering member is stacked or laminated at the surface of the interior side of the three-layer complex plastic sheet material or a back treating material such as a non-woven fabric is laminated at the surface of the ceiling iron plate side.

The automobile interior headline molding or forming member of the present invention can be preferably used as the molding or forming material for the automobile air duct and the like, for example. In addition, the automobile air duct of the present invention shows a lower aeration characteristic as compared with that of the prior art product and can improve a leakage from the duct. In addition, an elongation characteristic of the member is preferable as compared with that of the prior art product, a curved surface shape or a deep engraving molding or forming is facilitated and it has a sufficient characteristic as the automobile air duct.

Further, it is not necessary to make a complex constitution as found in the prior art product for improving a leakage, its manufacturing can be easily performed and its cost can be reduced.

Further, the mica-containing polypropylene sheet at the front surface side of the three-layer complex plastic sheet material has a sufficient rigidity as well as superior size stability and anti-flexing characteristic at a high temperature and so it shows a superior molding or forming characteristic.

In addition, not only an improvement of rigidity of the three-layer structure but also an anti-flexing characteristic at a high temperature can be improved by making a partial adhesion of the mica-containing polypropylene sheet at a location requiring a strength, in particular, of the three-layer complex plastic sheet material and then the light weight and the cost reduction caused by reduction in members can be realized.

Having described specific preferred embodiments of the invention with reference to the accompanying drawings , it will be appreciated that the present invention is not limited to those precise embodiments, and that various changes and modifications can be effected therein by one of ordinary skill in the art without departing from the scope of the invention as defined by the appended claims.

**Claims**

1.  An automobile interior headliner molding or forming member comprising a three-layer complex plastic sheet material having formed of an expanded polypropylene sheet and mica-containing polypropylene sheets stacked on both sides thereof.

2.  An automobile interior headliner molding or forming member according to claim 1 **characterized in that** an aeration characteristic of the three-layer complex plastic sheet material (JIS L1096: 1999) is 0.8 $cm^3/cm^2 \cdot$ s or less.

3.  An automobile interior headliner molding or forming member according to claim 1 **characterized in that** an elongation of the three-layer complex plastic sheet material at the time of its molding or forming (JIS K6767: 1999) is 200 to 300%.

4.  An automobile interior headliner molding or forming member according to claim 1 **characterized in that** an expansion ratio of the expanded polypropylene sheet constituting the three-layer complex plastic sheet material is 5 to 50 times and its thickness is 2 to 6 mm, the mica-containing polypropylene sheets are molded or formed by mica-containing resin in which mica is mixed with polypropylene resin having a mica containing ratio of 15 to 40 mass %, and its thickness is 100 to 300 μm.

5.  An automobile interior headliner molding or forming member according to claim 1 **characterized in that** a reinforcing portion is partially formed at one surface of the three-layer complex plastic material by the mica-containing polypropylene sheet.

6.  An automobile interior headliner molding or forming member according to claim 1 **characterized in that** a back treating material has been adhered to the back side of the three-layer complex plastic sheet material.

7.  An automobile air duct comprising a three-layer complex plastic sheet material having formed of an expanded polypropylene sheet and mica-containing polypropylene sheets stacked on both sides thereof.

F I G. 1

F I G. 2

F I G.3

F I G.4

F I G.5

F I G.6

F I G.7

F I G.8

# EP 1 310 358 A1

**European Patent Office**

## EUROPEAN SEARCH REPORT

Application Number

EP 02 25 7746

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 149 692 A (HONSHU INTERNAT PACKAGING CO L) 31 October 2001 (2001-10-31) * claims * | 1,4-6 | B32B27/32 B60R13/02 B32B27/20 |
| A | | 2,3,7 | |
| A | DE 43 20 636 A (YMOS AG IND PRODUKTE) 5 January 1995 (1995-01-05) * the whole document * | 1-16 | |
| A | DE 195 44 451 A (BASF AG) 5 June 1997 (1997-06-05) * the whole document * | 1-16 | |
| A | DE 198 35 612 A (TOYODA GOSEI KK) 11 February 1999 (1999-02-11) * claims; figure 1; example 1 * | 1-16 | |
| A | EP 0 708 146 A (SHOWA DENKO KK) 24 April 1996 (1996-04-24) * abstract * * table 6 * | 1 | |

TECHNICAL FIELDS SEARCHED (Int.Cl.7)

B60R

The present search report has been drawn up for all claims

| Place of search | Date of completion of the search | Examiner |
|---|---|---|
| THE HAGUE | 18 February 2003 | Ibarrola Torres, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

EP 1 310 358 A1

## ANNEX TO THE EUROPEAN SEARCH REPORT
## ON EUROPEAN PATENT APPLICATION NO.

EP 02 25 7746

This annex lists the patent family members relating to the patent documents cited in the above-mentioned European search report.
The members are as contained in the European Patent Office EDP file on
The European Patent Office is in no way liable for these particulars which are merely given for the purpose of information.

18-02-2003

| Patent document cited in search report | | Publication date | Patent family member(s) | | Publication date |
|---|---|---|---|---|---|
| EP 1149692 | A | 31-10-2001 | JP | 2002012093 A | 15-01-2002 |
| | | | EP | 1149692 A2 | 31-10-2001 |
| | | | PL | 347206 A1 | 05-11-2001 |
| | | | US | 2002001706 A1 | 03-01-2002 |
| DE 4320636 | A | 05-01-1995 | DE | 4320636 A1 | 05-01-1995 |
| DE 19544451 | A | 05-06-1997 | DE | 19544451 A1 | 05-06-1997 |
| DE 19835612 | A | 11-02-1999 | DE | 19835612 A1 | 11-02-1999 |
| | | | JP | 11240097 A | 07-09-1999 |
| | | | US | 6129378 A | 10-10-2000 |
| EP 0708146 | A | 24-04-1996 | JP | 8120157 A | 14-05-1996 |
| | | | JP | 8120129 A | 14-05-1996 |
| | | | CA | 2160618 A1 | 20-04-1996 |
| | | | DE | 69502161 D1 | 28-05-1998 |
| | | | DE | 69502161 T2 | 17-09-1998 |
| | | | EP | 0708146 A1 | 24-04-1996 |
| | | | US | 6203893 B1 | 20-03-2001 |
| | | | US | 5891946 A | 06-04-1999 |

EPO FORM P0459

For more details about this annex : see Official Journal of the European Patent Office, No. 12/82

18